# EUROPEAN PATENT SPECIFICATION

(11) **EP 0 613 081 B1**
(45) Date of publication and mention of the grant of the patent: **07.04.1999**
(21) Application number: 94300173.5
(22) Date of filing: 11.01.1994
(51) Int. Cl.: G06F 3/12

(54) **Printing device and method with function of keeping confidentiality of print information**
Druckgerät und Verfahren mit Geheimhaltungsfunktion für die Druckinformation
Appareil et méthode d'impression avec la fonction de garder confidentielles les informations d'impression

(30) Priority: 24.02.1993 JP 35291/93
(43) Date of publication of application: 31.08.1994
(73) Proprietor: BROTHER KOGYO KABUSHIKI KAISHA, Nagoya-shi, Aichi-ken 467 (JP)
(72) Inventor: Takeuchi, Takami, c/o Brother Kogyo K.K., Nagoya-shi, Aichi-ken (JP)
(74) Representative: Senior, Alan Murray

(56) References cited:
- WO-A-89/10617
- US-A- 4 630 198

## Description

### BACKGROUND OF THE INVENTION

### 1. Field of the Invention

This invention relates to a printing device having a function of re-printing the same print information after a print of the information is output.

### 2. Description of the Related Art

In a conventional printing device such as a laser printer or the like, print information that is transmitted in accordance with a print requirement from a host computer is temporarily stored into a reception buffer in a RAM, and a CPU converts the print information stored in the reception buffer to image information suitable for a printing operation in accordance with a program stored in a ROM. The print information is then stored into an image buffer. At the same time, the reception buffer suitably receives new print information from the host computer, and the CPU successively converts the print information to image information and stores it in the image buffer.

At the time when a predetermined amount of image information, for example, image information of one page of a prescribed sheet (hereinafter referred to as "one-page image information") is stored in the image buffer, the printing device temporarily ceases its receiving operation of the print information from the host computer and carries out a printing operation of the content of the one-page image information. When the printing operation for prior one-page image information has been completed, the printing device receives and temporarily stores new one-page print information into the reception buffer as described above. Subsequently, in the same manner as described above, image information of subsequent pages is successively stored one by one into the image buffer and subjected to the printing operation. If an operator desires to obtain a print of the just-prior print (a print obtained in the just-previous printing operation), the same print command must be transmitted, and the same print information used for the previous printing operation must be transmitted from the host computer to the print device again. Therefore, the operator is required to repeat the same operation, and the printing device is required to receive the print information and carry out the data processing again. Accordingly, the conventional printing device takes a long time to obtain a duplicate print.

In order to overcome the above problem, a printing device as disclosed in Japanese Laid-open Patent Application No. 59-71590 has been recently proposed. In view of the technical knowledge that the one-page image information stored in the image buffer remains until new image information is transmitted from the reception buffer of the RAM, this printing device is provided with a re-printing function capable of re-printing the content of the image information currently stored in the image buffer through a prescribed key manipulation to easily obtain the same print as obtained in the just-previous printing operation. Further, another printing device as disclosed in Japanese Post-examined Patent Application No. 3-72473 has been proposed. This printing device is equipped with a console having a switch for indicating the number of reprints (the frequency of the re-printing operation), and it repeats the re-printing operation at the indicated frequency. A similar device is described in US-A-4630198.

In these printing devices, the just-prior print information can be easily re-printed for a short time only by the manipulation of a re-print function without sending the re-print information from the host computer and the data processing.

As described above, in the above re-printable printing devices, the previous image information is continued to be held in the image buffer even after the printing operation until the next print information is transmitted to the image buffer. Accordingly, when print information on confidential documents is transmitted from the host computer and subjected to the printing operation, the image data on the confidential documents remains unintentionally in the image buffer. Further, since the re-printing operation of the image data on the confidential documents may be also carried out by the prescribed key manipulation of any person other than the operator, any third party can access the confidential documents.

WO-A-8910617 discloses a printer/copier which makes use of DRAM to store image data such that, unless the image data is refreshed, it will degrade and hence prevent further printing.

An object of this invention is to provide a printing device capable of keeping the confidentiality of print information by restricting a re-printing function.

In order to attain the above object there is provided a printing device having a memory for storing print information transmitted from a host computer in an amount corresponding to at least one page of a prescribed sheet, and printing means for carrying out a printing operation of the information stored in the memory, the printing device comprising:
print control means for controlling said memory to successively store the print information therein in response to an instruction from said host computer and for controlling said printing means to read out the stored print information and to carry out a printing operation of the read-out print information;
reprint control means for selectively controlling said printing means to read out the information stored in said memory again after the printing operation and to carry out a reprinting operation of the information;
inhibiting means comprising:
read out inhibiting means for selectively inhibiting the selective reprinting operation of said reprint control means by having a re-print release key for inhibiting said reprint control means from reading out the print information from said memory if the re-print release key is pushed;
a timer for counting a lapse time after the printing operation;
an erase key; and
an erasing means for erasing the print information in said memory when said erase key is pushed or said timer counts a predetermined time provided that the re-print release key is not pushed and reprint control means does not execute the reprinting operation.

According to the present invention, there is also provided a printing method using a printing device having a print key, a re-print release key, an erase key, a memory for storing print information transmitted from a host computer in an amount corresponding to at least one page of a prescribed sheet and printing means for carrying out a printing operation of the information stored in the memory, the method comprising the steps of:
successively storing the print information in said memory in response to an instruction from said host computer and reading out the stored print information to carry out a printing operation of the read-out print information;
selectively controlling said printing means to read out the information stored in said memory again after the printing operation and carrying out a reprinting operation of the information; and
selectively inhibiting the selective reprinting operation in said controlling step by;
pushing the re-print release key for inhibiting reading out of the print information from said memory; or
pushing the erase key for erasing print information stored in said memory; or
counting a lapse time after the printing operation, and erasing the print information in said memory when a predetermined time is counted in said counting step provided that the re-print release key is not pushed and the print key is not pushed.

According to the print device thus constructed, at least one-page image information that is transmitted from the host computer is stored into the memory. In accordance with an instruction from the host computer, the print information is successively stored into the memory by the print control device, and also in accordance with an instruction supplied to the printer, the information stored in the memory is read out and printed by the printer.

When the operator desires to obtain the same print as obtained in the just-previous printing operation, upon instruction of the re-print control device to the printer, the information stored in the memory after the printing operation is read out and printed again.

On the other hand, in the case where a confidential document or the like is printed and it is desired to be prevented from being re-printed by any third party, the inhibiting device inhibits the re-printing operation of the re-print control device to keep the confidentiality of the document.

### BRIEF DESCRIPTION OF THE DRAWING

Fig. 1 is a block diagram showing the construction of this invention;
Fig. 2 is a block diagram showing an embodiment according to this invention;
Fig. 3 is a flowchart for a normal print processing program; and
Fig. 4 is a flowchart for a re-print processing program.

### DETAILED DESCRIPTION OF PREFERRED EMBODIMENTS

A preferred embodiment according to this invention will be described hereunder with reference to the accompanying drawings.

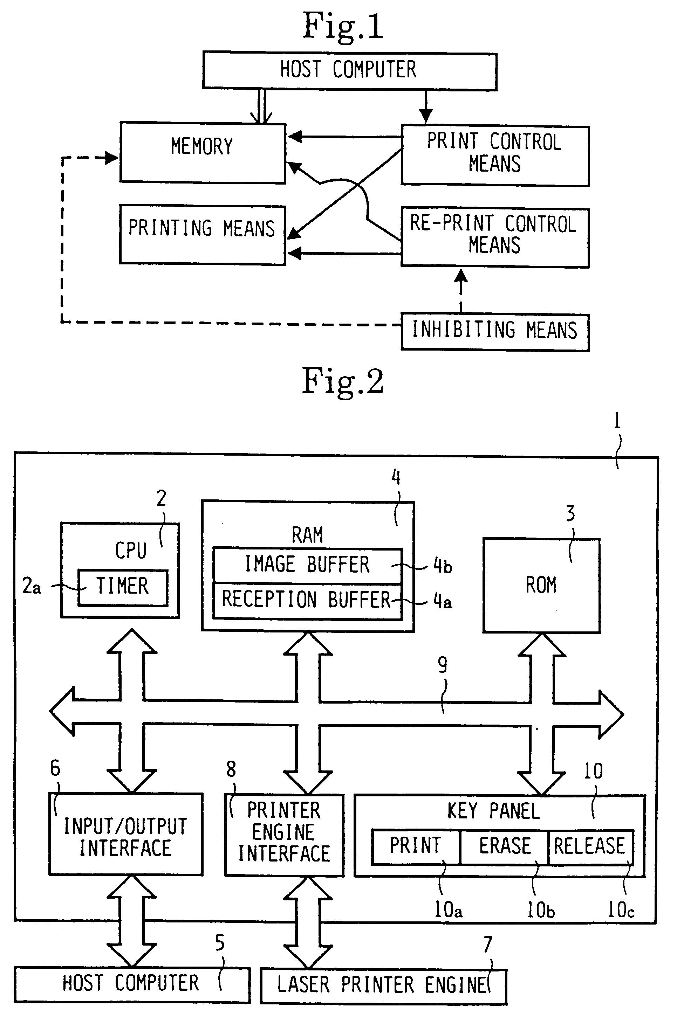

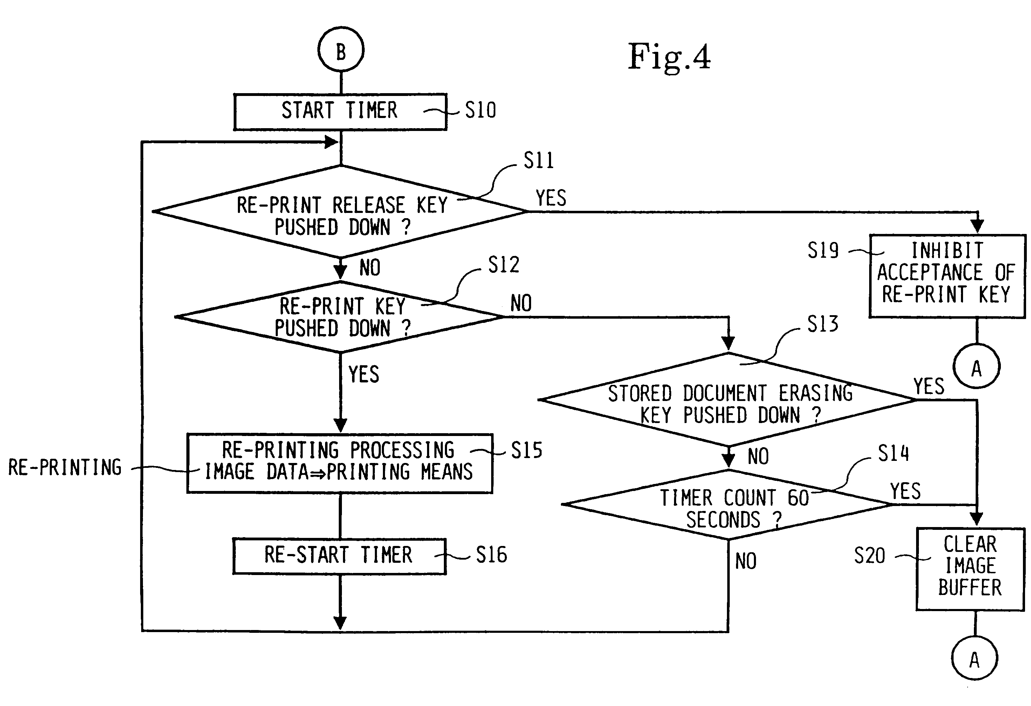

Fig. 2 is a block diagram showing the electrical construction of a control device 1 for a laser printer serving as a printing device. The control device 1 includes a CPU 2 for controlling the operation of the laser printer, a ROM 3 for storing a main control program and other various control programs such as a re-print processing program as shown in Fig. 4, etc., a RAM 4 serving as a memory, an input/output interface 6 for carrying out communication with a host computer 5, a printer engine interface 8 for carrying out communication with a laser printer engine 7, a key panel 10 for instructing various commands, and a bus 9 for connecting the above elements to one another.

Further, the RAM 4 includes a reception buffer 4a for holding print information and an image buffer 4b for storing image data. In the following description, the print information stored in the RAM 4, that is, the print information in the reception buffer 4a, and the image information in the image buffer 4b, are collectively referred to as "stored document". The key panel 10 includes a re-print key 10a, a stored document erasing key 10b and a re-print releasing key 10c as well as keys for a normal printing operation. The CPU 2 contains a timer 2a using a clock signal therein.

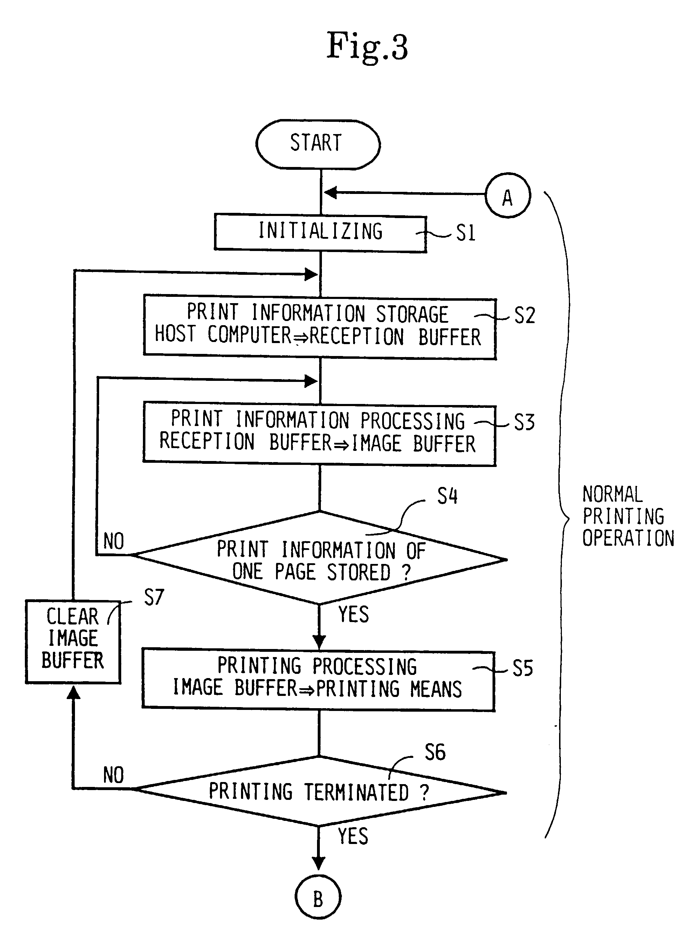

The operation of the laser printer engine 7 is controlled through a decoding operation of the print information input from the host computer 5 by the printing device 1. The control program for the above operation will be described with reference to Fig. 3. Fig. 3 is a flow-chart for a normal print processing program.

When the print instruction is supplied from the host computer 5 to the printing device 1, the control operation is started. Upon receiving the print instruction, the print device 1 carries out an initializing operation such as a formatting operation, which includes an erasing operation of the stored document in the RAM, etc. (S1).

Thereafter, the print information that is transmitted from the host computer 5 is transmitted through the input/output interface 6 to the RAM 4. The transmitted print information is temporarily stored into the reception buffer 4a of the RAM 4 (S2).

In accordance with the program in the ROM 3, the print information stored in the reception buffer 4a is converted to image information represented by a dot pattern by the CPU 2 and stored in the image buffer 4b (S3). Further, the reception buffer 4a suitably receives new print information from the host computer 5, and the CPU 2 successively stores the new print information into the image buffer 4b.

At the time when the amount of print information stored in the image buffer 4b reaches a predetermined fixed value, for example, the amount corresponding to one page of a prescribed sheet (S4:YES), the CPU 2 temporarily ceases reception of the print information and transmits the content of the one-page print information through the printer engine interface 8 to the laser printer engine 7 to carry out the printing operation of the one-page print information (S5). When the printing operation of the one-page print information is completed, at a next step S6, it is judged whether the printing operation is finished. If new print information has been further transmitted from the host computer (S6: NO), the image buffer 4b is cleared (S7), and the program returns to step S2 at which the printing device stores print information of a next page into the reception buffer 4a. Thereafter, the printing operation is repeated while print information of subsequent pages is successively stored into the image buffer 4b one by one in the same manner as described above.

After a series of normal print operations are terminated (S6: YES), the one-page image information remains in the image buffer 4b of the RAM 4 as described above. If a setting of inhibiting the re-print operation has not been made, the re-print operation may be performed by pushing the re-print key 10a of the key panel 10. The operation of the re-printing processing in this embodiment will be described with reference to Fig. 4.

The time when the normal printing operation is finished is set as a reference time, and a clock of the CPU 2 of the printing device 1 is used as a timer 2a. The timer 2a is started (S10). If the re-print release key is not pushed (S11: NO), the re-printing operation is carried out (S15) by pushing the re-print key 10a (S12: YES). The one-page image information remaining in the image buffer 4b is read out and transmitted through the printer engine interface 8 to the laser printer engine 7 to carry out the printing operation. As a result, the same content as the just-previous print output can be obtained.

After the re-printing operation is completed, the program goes to step S16 to set the value of the timer 2a and re-start the timer 2a, and the program returns to step S11. Through this operation, the re-print operation is allowed to be carried out again if the re-print key 10a is pushed within a predetermined time from the re-start time of the timer 2a.

However, if the predetermined time (for example, 60 seconds) has elapsed before any instruction is supplied to the printing device (S14: YES), the CPU 2 outputs an instruction to the RAM 4 to erase at least the image information stored in the image buffer 4b of the RAM 4 (S20). Through this operation, the stored document to be re-printed is erased in the printing device, and thus it is impossible to carry out the re-printing operation of the document. Even if it is within the predetermined time lapse, at step S11, it is judged whether the re-print release key 10c is beforehand pushed. If the key is judged to be pushed (S11: YES), the input of the re-print key 10a is neglected until the setting of the key as described above is afterwards altered (S19). That is, since no re-print instruction is transmitted to the CPU 2, the re-printing operation cannot be carried out in the printing device.

Further, if the stored document erasing key 10b is pushed (S13: YES), although it is within the predetermined time, the program goes to step S20. At step S20, the CPU 2 outputs an instruction to clear the image information stored in the image buffer 4b as described above. Likewise, through this operation, the printing device loses the stored document to be re-printed, and thus, the reprinting operation of the document cannot be carried out.

The re-printing operation is controlled in accordance with the program as described above, and a complete print processing program is constructed by the combination of the flowcharts as shown in Figs. 3 and 4.

As described above, the re-print instruction by the re-print key 10a is inhibited by the following inhibiting means in the printing device of this embodiment.

One embodiment of inhibiting the re-printing operation is proposed using a "time-out" as a condition of inhibiting the re-printing operation. On the basis of this inhibiting condition, any third party is prevented from carrying out the re-printing operation of private print information, and thus, the private print information is prevented from being disclosed even after a normal printing operation of the private print information by an operator of the printing device is finished. In addition, the stored document in the printing device is automatically erased without burdening the operator because the inhibiting operation is carried out through a time control.

Further, by pushing the stored document erasing key 10b after the normal printing operation is finished, the CPU 2 erases at least the image information of the image buffer 4b in the RAM 4, and thus loses the stored document to be re-printed, thereby inhibiting the re-print of the image information. Using the inhibiting means, the operator freely discards the stored document, and thus, the operator can positively keep the confidentiality of the print information, so that the re-printing operation can be effectively used.

Another embodiment of inhibiting the re-printing operation is proposed inhibiting use of the re-printing function, not by erasing the print information, but by pushing the re-print release key 10c. In this embodiment, the re-print key 10a is set as a nullifying key for a specified stored document by pushing the re-print release key 10c, and thus, the re-print command is deactivated.

The re-printing operation is restricted by the above inhibiting conditions.

Next, the re-printing operation for a printing device equipped with a reception buffer 4a capable of storing a plurality of sheets of print information and the print information in the reception buffer 4a is kept even after the printing operation will be described. In this case, a document that is required to be re-printed is selected by a prescribed key input manipulation on the key panel 10, and the CPU 2 is actuated to read out a part of the print information in the reception buffer 4a, that is, the document is specified by the manipulation. Subsequently, like the normal printing operation, the read-out print information is converted to image information that is formatted so as to be suitable for the printing operation and then transmitted to the image buffer 4b. Further, the image information is transmitted through the printer engine interface 8 to the laser printer engine 7, and the re-printing operation is executed. As a result, not only the just-prior print information, but also the print information over plural prior pages can be obtained.

In the print device capable of re-printing the print information over plural prior pages as described above, means of erasing even the print information stored in the reception buffer 4a may be used as the inhibiting means of the re-printing operation.

## Claims

1. A printing device (1) having a memory (4) for storing print information transmitted from a host computer (5) in an amount corresponding to at least one page of a prescribed sheet, and printing means (7,8) for carrying out a printing operation of the information stored in the memory (4), the printing device comprising:
print control means (2) for controlling said memory (4) to successively store the print information therein in response to an instruction from said host computer (5) and for controlling said printing means (7,8) to read out the stored print information and to carry out a printing operation of the read-out print information;
reprint control means (2,10a) for selectively controlling said printing means (7,8) to read out the information stored in said memory (4) again after the printing operation and to carry out a reprinting operation of the information;
inhibiting means (2a,10) comprising:
read out inhibiting means for selectively inhibiting the selective reprinting operation of said reprint control means (2,10a) by having a re-print release key (10c) for inhibiting said reprint control means from reading out the print information from said memory (4) if the re-print release key (10c) is pushed;
a timer (2a) for counting a lapse time after the printing operation;
an erase key (10b); and
an erasing means (S20) for erasing the print information in said memory (4) when said erase key (10b) is pushed or said timer counts a predetermined time provided that the re-print release key is not pushed and reprint control means does not execute the reprinting operation.

2. The printing device as claimed in claim 1, wherein said memory (4) stores print information in an amount corresponding to a plurality of pages of prescribed sheets, said reprint control means (2) comprising means for specifying which of said print information of said plurality of pages to send to said printing means (7,8).

3. A printing device according to claim 1 wherein the memory is a RAM and the printing device further comprises:
an input/output interface (6) for providing communication between said printing device (1) and said host computer (5);
a printer engine interface (8) for providing communication between aaid printing device (1) and a printer engine (7); and
a CPU (2) comprising the print control means, the reprint control means and the inhibiting means.

4. The printing device as claimed in claim 1, 2 or 3, further comprising a key panel (10) having a print key (10a), the erase key (10b) and the reprint release key (10c).

5. A printing method using a printing device (1) having a print key (10b), a re-print release key (10c), an erase key (10b), a memory (4) for storing print information transmitted from a host computer (5) in an amount corresponding to at least one page of a prescribed sheet and printing means (7,8) for carrying out a printing operation of the information stored in the memory (4), the method comprising the steps of:
euccessively storing the print information in said memory (4) in response to an instruction from said host computer (5) and reading out the stored print information to carry out a printing operation of the read-out print information;
selectively controlling said printing means (7,8) to read out the information stored in said memory (4) again after the printing operation and carrying out a reprinting operation of the information; and
selectively inhibiting (2a,10) the selective reprinting operation in said controlling step by:
pushing the re-print release key for inhibiting reading out of the print information from said memory; or
pushing the erase key for erasing print information stored in said memory; or
counting (2a) a lapse time after the printing operation, and erasing the print information in said memory (4) when a predetermined time is counted in said counting step provided that the re-print release key is not pushed and the print key is not pushed.

6. The printing method as claimed in claim 5 wherein said memory (4) stores print information in an amount corresponding to a plurality of pages of prescribed sheets, the method further comprising the step of specifying which of said print information of said plurality of pages to send to said printing means (7,8).

## Patentansprüche

1. Druckvorrichtung (1) mit einem Speicher (4) zum Speichern von Druckinformation, die von Host-Computer (5) übertragen wird, in einer Menge, die mindestens einer Seite eines vorgeschriebenen Blattes entspricht, und einem Druckmittel (7, 8) zum Ausführen eines Druckbetriebes der Information, die in dem Speicher (4) gespeichert ist, wobei die Druckvorrichtung aufweist:
ein Drucksteuermittel (2) zum Steuern des Speichers (4) zum aufeinanderfolgenden Speichern der Druckinformation in diesem als Reaktion auf eine Anweisung von dem Host-Computer (5) und zum Steuern des Druckmittels (7, 8) zum Auslesen der gespeicherten Druckinformation und zum Ausführen eines Druckbetriebes der ausgelesenen Druckinformation;
ein Erneutdrucksteuermittel (2, 10a) zum selektiven Steuern des Druckmittels (7, 8) zum erneuten Auslesen der Information, die in dem Speicher(4) gespeichert ist, nach dem Druckbetrieb und zum Ausführen eines Betriebes zum erneuten Drucken der Information;
ein Sperrmittel (2a, 10), das aufweist:
ein Auslesesperrmittel zum selektiven Sperren des Betriebes zum selektiven erneuten Drucken des Erneutdrucksteuermittels (2, 10a) durch Aufweisen einer Erneutdrucklösetaste (10c) zum Hindern des Erneutdrucksteuermittels am Auslesen der Druckinformation aus dem Speicher (4), falls die Erneutdrucklösetaste (10c) gedrückt ist;
einen Zeitgeber (2a) zum Zählen einer Ablaufzeit nach dem Druckbetrieb;
eine Löschtaste (10b); und
ein Löschmittel (S20) zum Löschen der Druckinformation in dem Speicher (4), wenn die Löschtaste (10b) gedrückt ist oder der Zeitgeber eine vorbestimmte Zeit zählt, vorausgesetzt, daß die Erneutdrucklösetaste nicht gedrückt ist und das Erneutdrucksteuermittel den Betrieb zum erneuten Drucken nicht ausführt.

2. Druckvorrichtung nach Anspruch 1, bei der
der Speicher (4) die Druckinformation in einer Menge, die einer Mehrzahl von Seiten von vorgeschriebenen Blättern entspricht, speichert, wobei das Erneutdrucksteuermittel (2) ein Mittel zum Spezifizieren, welche der Druckinformation aus der Mehrzahl von Seiten an das Druckmittel (7, 8) zu senden ist, aufweist.

3. Druckvorrichtung nach Anspruch 1, bei der
der Speicher ein RAM ist und die Druckvorrichtung weiter aufweist:
eine Eingabe/Ausgabe-Schnittstelle (6) zum Liefern einer Kommunikation zwischen der Druckvorrichtung (1) und dem Host-Computer (5);
eine Druckmaschinenschnittstelle (8) zum Liefern einer Kommunikation zwischen der Druckvorrichtung (1) und einer Druckmaschine (7); und
eine CPU (2), die das Drucksteuermittel, das Erneutdrucksteuermittel und das Sperrmittel aufweist.

4. Druckvorrichtung nach Anspruch 1, 2 oder 3, die weiter eine Tastatur (10) aufweist, die eine Drucktaste (10a), die Löschtaste (10b) und die Erneutdrucklösetaste (10c) aufweist.

5. Druckverfahren, das eine Druckvorrichtung (1) mit einer Drucktaste (10b) einer Erneutdrucklösetaste (10c), einer Löschtaste (10b), einem Speicher (4) zum Speichern von Druckinformation, die von einem Host-Computer (5) übertragen wird, in einer Menge, die mindestens einer Seite eines vorgeschriebenen Blattes entspricht, und einem Druckmittel (7, 8) zum Ausführen eines Druckbetriebes der Information, die in dem Speicher (4) gespeichert ist, verwendet, wobei das Verfahren die Schritte aufweist:
aufeinanderfolgendes Speichern der Druckinformation in dem Speicher (4) als Reaktion auf eine Anweisung von dem Host-Computer (5) und Auslesen der gespeicherten Druckinformation zum Ausführen eines Druckbetriebes der ausgelesenen Druckinformation;
selektives Steuern des Druckmittels (7, 8) zum erneuten Auslesen der Information, die in dem Speicher (4) gespeichert ist, nach dem Druckbetrieb und Ausführen eines Betriebes zum erneuten Drucken der Information; und
selektives Sperren (2a, 10) des Betriebes zum selektiven erneuten Drucken in dem Steuerschritt durch:
Drücken der Erneutdrucklösetaste zum Sperren des Auslesens der Druckinformation aus dem Speicher; oder
Drücken der Löschtaste zum Löschen der Druckinformation, die in dem Speicher gespeichert ist; oder
Zählen (2a) einer Ablaufzeit nach dem Druckbetrieb und Löschen der Druckinformation in dem Speicher (4), wenn eine vorbestimmte Zeit in dem Zählschritt gezählt ist, vorausgesetzt, daß die Erneutdrucklösetaste nicht gedrückt ist und die Drucktaste nicht gedrückt ist.

6. Druckverfahren nach Anspruch 5, bei dem
der Speicher (4) die Druckinformation in einer Menge speichert, die eine Mehrzahl von Seiten von vorgeschriebenen Blättern entspricht, wobei das Verfahren weiter den Schritt des Spezifizierens aufweist, welche der Druckinformationen aus der Mehrzahl von Seiten an das Druckmittel (7, 8) zu senden ist.

## Revendications

1. Dispositif d'impression (1) ayant une mémoire (4) pour mémoriser des informations d'impression transmises à partir d'un ordinateur hôte (5) selon un volume correspondant à au moins une seule page d'une feuille prédéterminée, et des moyens d'impression (7, 8) pour mettre en oeuvre une opération d'impression des informations mémorisées dans la mémoire (4), le dispositif d'impression comprenant :
des moyens de commande d'impression (2) pour commander la dite mémoire (4) pour mémoriser successivement les informations d'impression en elle en réponse à une instruction en provenance du dit ordinateur hôte 5 et pour commander les dits moyens d'impression (7, 8) pour lire les informations d'impression mémorisées et pour mettre en oeuvre une opération d'impression des informations d'impression lues ;
des moyens de commande de réimpression (2, 10a) pour commander sélectivement les dits moyens d'impression (7, 8) pour lire les informations mémorisées dans la dite mémoire (4) à nouveau après l'opération d'impression et pour mettre en oeuvre une opération de réimpression des informations ;
des moyens d'empêchement (2a, 10) comprenant :
des moyens d'empêchement de lecture pour empêcher sélectivement l'opération de réimpression sélective des dits moyens de commande de réimpression (2, 10a) en ayant une touche de verrouillage de réimpression (10c) pour empêcher les dits moyens de commande de réimpression de lire les informations d'impression à partir de la dite mémoire (4) lorsque la touche de verrouillage de réimpression (10c) est poussée ;
une minuterie (2a) pour compter une durée écoulée après l'opération d'impression ;
une touche d'effacement (10b) ; et
des moyens d'effacement (S20) pour effacer les informations d'impression dans la dite mémoire (4) lorsque la dite touche d'effacement (10b) est poussée ou bien que la dite minuterie compte une durée prédéterminée étant donné que la touche de verrouillage de réimpression n'est pas poussée et que les moyens de commande de réimpression n'exécutent pas l'opération de réimpression.

2. Dispositif d'impression selon la revendication 1, dans lequel la dite mémoire (4) mémorise les informations d'impression selon un volume correspondant à une pluralité de pages de feuilles prédéterminées, les dits moyens de commande de réimpression (2) comprenant des moyens pour spécifier lesquelles des dites informations d'impression des dites pluralités de pages doivent être transmises aux dits moyens d'impression (7, 8).

3. Dispositif d'impression selon la revendication 1, dans lequel la mémoire est une mémoire RAM et le dispositif d'impression comprend, en outre :
une interface d'entrée/sortie (6) pour établir une communication entre le dit dispositif d'impression (1) et le dit ordinateur hôte (5) ;
une interface de moteur d'imprimante (8) pour établir une communication entre le dit dispositif d'impression (1) et un moteur d'imprimante (7) ; et
une CPU 2 comprenant les moyens de commande d'impression, les moyens de commande de réimpression et les moyens d'empêchement.

4. Dispositif d'impression selon la revendication 1, 2 ou 3, comprenant, en outre, un clavier (10) comportant une touche d'impression (10a), la touche d'effacement (10b) et la touche de verrouillage de réimpression (10c).

5. Procédé d'impression utilisant un dispositif d'impression 1 ayant une touche d'impression (10b), une touche de verrouillage de réimpression (10c), une touche d'effacement (10b), une mémoire (4) pour mémoriser les informations d'impression transmises à partir d'un ordinateur hôte (5) selon un volume correspondant à au moins une seule page d'une feuille prédéterminée et des moyens d'impression (7, 8) pour mettre en oeuvre une opération d'impression des informations mémorisées dans la mémoire (4), le procédé comprenant les étapes consistant :
à mémoriser successivement les informations d'impression dans la dite mémoire (4) en réponse à une instruction en provenance du dit ordinateur hôte (5) et à lire les informations d'impression mémorisées pour mettre en oeuvre une opération d'impression des informations d'impression lues ;
à commander sélectivement les dits moyens d'impression (7, 8) pour qu'ils lisent les informations mémorisées dans la dite mémoire (4) à nouveau après l'opération d'impression et à mettre en oeuvre une opération de réimpression des informations ; et
à empêcher sélectivement (2a, 10) l'opération de réimpression sélective au cours de la dite étape de commande :
en poussant la touche de verrouillage de réimpression pour empêcher la lecture des informations d'impression à partir de la dite mémoire ; ou
en poussant la touche d'effacement pour effacer les informations d'impression mémorisées dans la dite mémoire ; ou bien
en comptant (2a) une durée écoulée après l'opération d'impression et en effaçant les informations d'impression dans la dite mémoire (4) lorsqu'une durée prédéterminée est comptée au cours de la dite étape de comptage étant donné que la touche de verrouillage de réimpression n'est pas poussée et que la touche d'impression n'est pas poussée.

6. Procédé d'impression selon la revendication 5, dans lequel la dite mémoire (4) mémorise les informations d'impression selon un volume correspondant à une pluralité de pages de feuilles prédéterminées, le procédé comprenant en outre l'étape consistant à spécifier lesquelles des dites informations d'impression des dites pluralités de pages doivent être transmises aux dits moyens d'impression (7, 8).
